# EUROPEAN PATENT APPLICATION

(11) **EP 1 106 820 A1**
(43) Date of publication of application: **13.06.2001**
(21) Application number: 00125596.7
(22) Date of filing: 22.11.2000
(51) Int. Cl.: F02M 69/54, G05D 16/06

(54) **A pressure regulator for fuel supply systems**

(30) Priority: 30.11.1999 IT BO990652
(71) Applicant: MAGNETI MARELLI S.p.A., 20145 Milano (IT)
(72) Inventor: Zanchetta, Paolo, 33079 Sesto al Reghena (IT); Pasquali, Paolo, 40100 Bologna (IT)
(74) Representative: Eccetto, Mauro

(57) **Abstract**

A pressure regulator (1) for fuel supply systems, the regulator (1) being provided with a regulation valve (10) which is normally closed, which is provided with a valve body (14) moving in a control direction (15) in order to engage a fixed valve seat (13) defined by a central hole (23) surrounded by the a first plane metal surface (24); the valve body (14) being defined by a metal support member (25) which is urged against the valve seat (13) by a first spring (16) and is provided with a second metal surface (28) adapted to engage the first metal surface (24), a shutter (30) of elastomer and of substantially hemispherical shape being disposed within the support member (25) of the valve body, which shutter is mounted to move in the control direction (15) and against the action of a second spring (31) in order to engage the hole (23) of the valve seat (13) in a fluid-tight manner.

## Description

The present invention relates to a pressure regulator for fuel supply systems, in particular for liquid fuel supply systems for vehicles with engines.

Known fuel supply systems generally comprise a regulation valve whicn is normally closed and which is provided with a valve body moving in a control direction in order to engage a fixed valve seat defined by a central hole surrounded by a plane metal surface. The valve body comprises a metal support member which is urged against the valve seat by a spring and is provided with a metal shutter of spherical shape adapted to engage the hole of the valve seat in a fluid-tight manner.

It is known that in fuel supply systems it is important for the regulation valve to ensure a completely hermetic closure of the relative valve seat even at relatively high pressure values of the fuel (some 80-90% of the nominal working pressure). However, the regulation valves of the type described above, in which a metal shutter engages a metal valve seat, do not always manage to ensure a completely hermetic closure of the relative valve seat at relatively high pressure values.

In order to resolve the drawback described above a pressure regulator has been proposed in which the shutter is formed by a plane metal surface which is disposed parallel to the metal surface of the valve seat and is provided with an elastomer insert engaging the valve seat, when the valve body is in its closed position. According to a possible embodiment, the surface of the valve seat has a circular raised rib which is adapted to engage the elastomer insert in order to increase the pressure acting on the elastomer ring. This constructional solution ensures a completely hermetic closure of the relative valve seat at relatively high pressure values. The elastomer ring is, however, subject to very high stresses as it must withstand the entire thrust of the spring (which may reach 19 b N) and at the same time the chemical aggression of the fuel; the combination of these two factors entails rapid ageing of the elastomer thereby substantially reducing the service life of the pressure regulator.

The object of the present invention is to provide a pressure regulator for fuel supply systems which is free from the drawbacks described above and is, moreover, simple and economic to embody.

A pressure regulator as described in claim 1 is provided in accordance with the present invention.

The present invention will now be described with reference to the accompanying drawing, which show a nonlimiting embodiment thereof, in which:
Fig. 1 is a view in lateral section, with some parts removed for clarity, of a preferred embodiment of the pressure regulator of the present invention;
Fig. 2 is a view in lateral section and on an enlarged scale of a detail of Fig. 1; and
Fig. 3 is an exploded perspective view of some components of the regulator of Fig. 1.

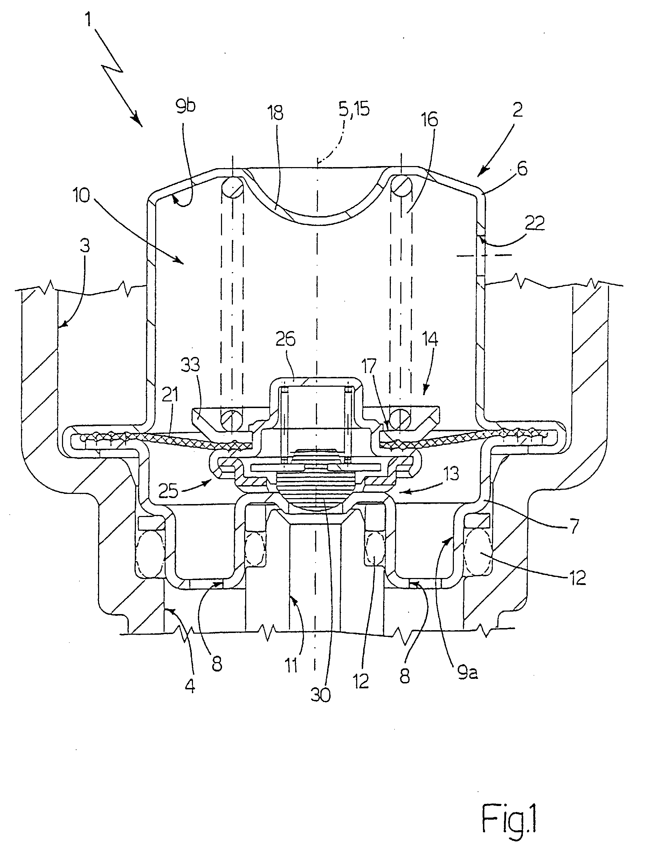

In Fig. 1, a pressure regulator for a fuel supply system (not shown) is shown overall by 1; the regulator 1 comprises a container 2 of substantially cylindrical shape and is housed in a chamber 3 connected via a lower annular duct 4 to a fuel supply duct (not shown).

The container 2 is cylindrically symmetrical about an axis 5 and is formed by joining a cup-shaped upper portion 6 and a cup-shaped lower portion 7; the lower portion 7 has a series of through holes 8 adapted to keep the duct 4 permanently in communication with a lower portion 9a of an inner chamber 9 of the container 2. The chamber 9 houses a regulation valve 10 which is normally closed and is adapted to bring the lower portion 9a of the chamber 9 into communication with a cylindrical exhaust duct 11 coaxial to the axis 5 and communicating with a fuel tank (not shown).

In operation, the pressurised fuel is supplied via the supply duct (not shown) and is therefore also supplied to the duct 4 and to the lower portion 9a of the chamber 9. When the fuel pressure reaches a predetermined threshold value, the valve 10 opens causing part of the fuel to flow along the duct 11 in order to achieve a situation of equilibrium in which the fuel pressure remains constant at a predetermined value. When the fuel pressure in the lower portion 9a of the chamber 9, and therefore in the duct 4 and in the supply duct (not shown), drops below the predetermined threshold value, the valve 10 closes.

In order to connect the container 10 in a fluid-tight manner to the walls of the chamber 3, elastomer rings 12 are interposed according to known methods between the container 2 and the chamber 3.

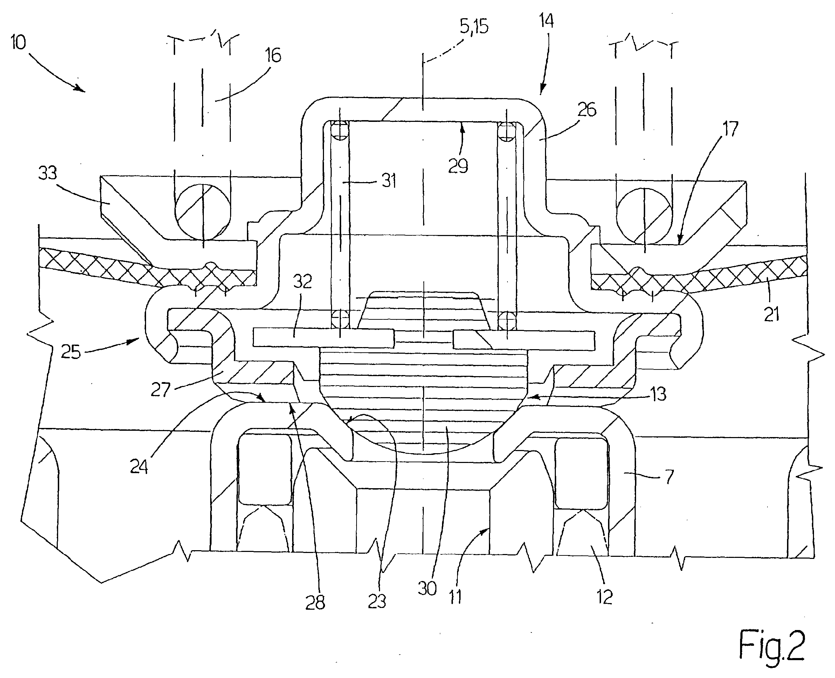

The valve 10 comprises a fixed valve seat 13 obtained directly on the lower portion 7 and a valve body 14 moving in a control direction 15 parallel to the axis 5 between a closed position (shown in Figs. 1 and 2) in which the body 14 engages the seat 13 in a fluid-tight manner and an open position (not shown) in which the body 14 is raised with respect to the seat 13 thereby bringing the duct 11 into communication with the lower portion 9a of the chamber 9.

The valve body 14 is pressed against the seat 13 by a main spring 16 at a predetermined force (generally between 60 and 19b N); the main spring 16 is disposed coaxially to the axis 5 between a respective housing 17 obtained on the upper portion of the body 14 and an upper wall of the chamber 9. According to a preferred embodiment shown in Fig. 1, the upper wall of the chamber 9 has a deformation 18 adapted to maintain an upper portion of the main spring 16 in a position coaxial to the axis 5.

The chamber 9 is divided into two portions which are isolated from one another, i.e. a lower portion 9a and an upper portion 9b, by an impermeable and elastically deformable diaphragm 21 which has an annular shape and is connected in a fluid-tight manner externally to the lateral wall of the chamber 9 and internally to the valve body 14. The lower portion 9a is, in operation, filled with fuel and houses the valve seat 13, while the upper portion 9b houses the main spring 16, is free from pressurised fuel and is connected to atmosphere (at atmospheric pressure) via a through hole 22.

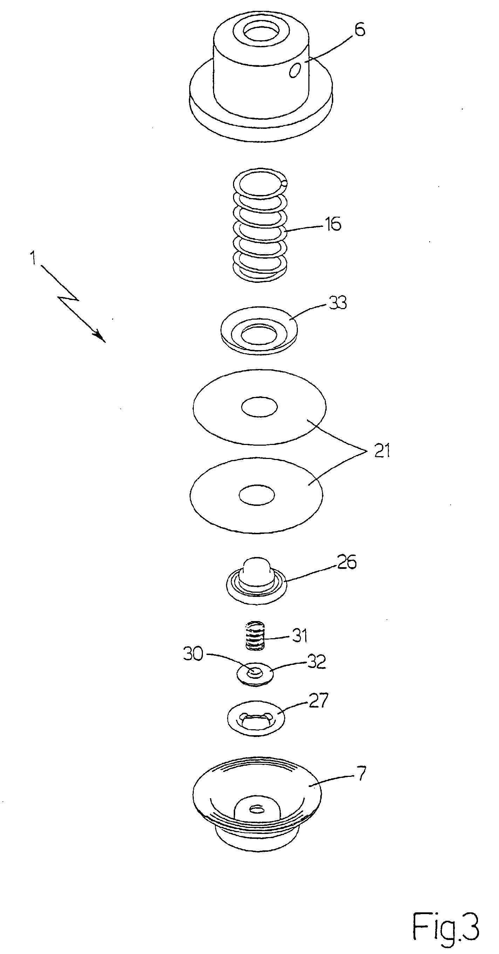

According to a preferred embodiment shown in Fig. 1, the diaphragm 21 is connected to the container 2 at the zone of connection of the portions 6 and 7 of this container 2; as shown in Fig. 3, the diaphragm 21 is formed by joining two annular members.

It is important to note that, in operation, the thrust force of the main spring 16 is countered by the force exerted by the. fuel pressure on the portion of the diaphragm 21 disposed in contact with the fuel and by the fuel pressure on part of the lower surface of the body 14. The thrust exerted by the main spring 16 is therefore selected on the basis of the area of the diaphragm 21 and the body 14 disposed in contact with the fuel and on the basis of the predetermined pressure value at which the valve 10 is to act.

As shown in Fig. 2, the valve seat 13 comprises a central frustoconical hole 23 which is coaxial with the axis 5 and communicates with the duct 11; the hole 23 is bounded by a plane, annular metal surface 24. The body 14 comprises a support member 25, which is formed by joining two members 26 and 27 of stamped sheet superimposed on one another and partially folded over one another. According to a different embodiment which is not shown, the walls of the hole 23 have a parabolic or hyperbolic course.

A lower portion of the support member 25 has a plane, annular metal surface 28 which is disposed in parallel with and facing the surface 24 of the seat 13 and is adapted to engage this surface 24 when the valve body 14 is disposed in the above-mentioned closed position (shown in Figs. 1 and 2).

The support member 25 comprises an inner chamber 29 which is open at the bottom, which houses an elastomer shutter 30 which is adapted to engage the hole 23 of the valve seat 13 in a fluid-tight manner. According to a preferred embodiment shown in the accompanying drawings, the shutter 30 has a substantially hemispherical shape and engages an inner portion of the hole 23. According to a different embodiment which is not shown, the shutter 30 has a disc shape and engages an outer portion of the hole 23. The hemispherical shape of the shutter 30 is preferable, as it is self-centring with respect to the frustoconical hole 23 and the degree of sealing is substantially unaffected by small variations of the inclination of the shutter 30 with respect to the axis 5.

The shutter 30 is mounted inside the chamber 29 so that it can move in the control direction 15 against the action of a secondary spring 31; in particular, an upper portion of the shutter 30 comprises a metal ring 32, which is substantially free to move within the chamber 29 and is secured to the secondary spring 31 which is in turn secured on opposite sides to an inner upper wall of the chamber 29. In this way, the shutter 30 may be displaced in a plane perpendicular to the control direction 16 in order to centre itself with respect to the hole 23.

When the valve body 14 is in the above-mentioned open position (not shown), the ring 32 engages an inner lower surface of the chamber 29, limiting the downward stroke of the shutter 30 under the thrust of the secondary spring 31.

In operation, in order to maintain the valve body 14 in the above-mentioned closed position (shown in Figs. 1 and 2), the main spring 16 presses on the support member 25 with a relatively high force (61-19 bN); as a result of this thrust force, the support member 25 is displaced towards the seat 13 until the surface 24 of the valve seat 13 and the corresponding surface 28 of the member 25 are in reciprocal contact. In this position, the shutter 30 engages the hole 23 in a fluid-tight manner under the relatively contained thrust (8-15 N) of the secondary spring 31 and under the thrust of the hydraulic pressure of the fuel.

It will be appreciated from the above description that the elastomer shutter 30 has to withstand the thrust of the secondary spring 31, which thrust is relatively contained and is calibrated in order to ensure a high level of fluid-tightness without, however, excessively stressing the shutter 30. However, the thrust of the main spring 16, which is relatively high in order to counter the fuel pressure, is borne wholly by the metal surfaces 24 and 28. In this way, the shutter 30 ensures a completely hermetic closure of the valve seat 13 even at relatively high fuel pressure values and, at the same time, is not mechanically stressed, thereby ensuring a relatively long service life.

Moreover, any dimensional variations (whether positive or negative) of the shutter 30 as a result of the chemical action of the fuel do not entail any kind of drawback, as the secondary spring 31 makes it possible to recover the play resulting from such dimensional variations of the shutter 30 without any problem.

In the pressure regulators used in fuel supply systems, the ratio between the operating thrust of the secondary spring 31 and the operating thrust of the main spring 16 is normally lower than 0.15.

It is important to note that the lower portion 7 of the container 2 is made in one piece from stamped sheet and comprises the valve seat 13. This embodiment is clearly different from the prior art, according to which the valve seat is formed in an upper portion of the duct 11, as it enables a reduction of the assembly costs of the regulator 1 by making it possible to connect the duct 11 to the portion 7 only in a final stage of construction of this regulator 1. The fact that the valve seat 13 is provided directly on the lower portion 7 is enabled by the use of a rubber shutter 30 which does not require particular processing (such as, for instance, lapping) of the valve seat 13.

Lastly, it is also important to note that the support member 25 of the valve body 14 is entirely produced by joining several components of stamped sheet, in particular the components 26 and 27 described above, and an annular component 33 comprising the housing 17 for the main spring 16. This embodiment is clearly different from the prior art, according to which the support member 25 is produced by lathe processing of a single metal component, since it makes it possible drastically to reduce the production costs of this member 25.

## Claims

1. A pressure regulator for fuel supply systems, this regulator (1) comprising a regulation valve (10) which is normally closed, which is provided with a valve body (14) moving in a control direction (15), a fixed valve seat (13) having a first plane metal surface (24) and a first spring (16) adapted to urge the valve body (14) against the valve seat (13), the valve body (14) comprising a metal support member (25) which is provided with a shutter (30) adapted to engage the valve seat (13) in a fluid-tight manner, the regulator (1) being characterised in that the shutter is borne by the support member (25) such that it can move in the control direction (15), the valve body (14) comprising a second plane metal surface (28) adapted to engage the first metal surface (24) and a second spring (31) adapted to urge the shutter (30) against the valve seat (13).

2. A pressure regulator as claimed in claim 1, in which the shutter (30) is made from elastomer.

3. A pressure regulator as claimed in claim 1 or 2, in which the elastomer shutter (30) has a substantially hemispherical shape.

4. A pressure regulator as claimed in claim 3, in which the valve seat (13) comprises at least one central hole (23) surrounded by first plane metal surface (24) which is an annular surface.

5. A pressure regulator as claimed in claim 4, in which the hole (23) of the valve seat (13) has a frustoconical shape.

6. A pressure regulator as claimed in one of the preceding claims, in which the support member (25) comprises a first inner chamber (29) open at the bottom, housing the second spring (31) and at least an upper portion of the shutter (30).

7. A pressure regulator as claimed in one of the preceding claims, in which the shutter (30) is borne by the support member (25) so that it can move in the control direction (15) and in a plane perpendicular to this control direction (15).

8. A pressure regulator as claimed in one of the preceding claims and comprising a container (2) provided with a second chamber (9) of substantially cylindrical shape, within which the regulation valve (10) is housed, the container (2) being formed by joining a cup-shaped upper portion (6) and a cup-shaped lower portion (7), the lower portion (7) being formed in one piece from stamped sheet and comprising the valve seat (13).

9. A pressure regulator as claimed in one of the preceding claims, in which the support member (25) is obtained by joining several components (26, 27, 33) of stamped sheet.

10. A pressure regulator as claimed in one of the preceding claims, in which the ratio between the operating thrust of the second spring (31) and the operating thrust of the first spring (16) is lower than 0.15.
